# EUROPÄISCHE PATENTSCHRIFT

(11) **EP 0 813 466 B1**
(45) Veröffentlichungstag und Bekanntmachung des Hinweises auf die Patenterteilung: **14.10.1998**
(21) Anmeldenummer: 96906714.9
(22) Anmeldetag: 26.02.1996
(51) Int. Cl.: B23Q 11/08

(54) **ABDECKUNG FÜR EIN MASCHINENBETT EINER WERKZEUGMASCHINE**
COVERING FOR A MACHINE TOOL BED
CAPOT POUR BANC DE MACHINE-OUTIL

(30) Priorität: 08.03.1995 DE 19508273
(43) Veröffentlichungstag der Anmeldung: 29.12.1997
(73) Patentinhaber: Kabelschlepp Gesellschaft mit beschränkter Haftung, 57074 Siegen (DE)
(72) Erfinder: WEHLER, Herbert, D-57290 Neunkirchen (DE); MÜLLER, Roland, D-57250 Netphen (DE)
(74) Vertreter: Kahlhöfer, Hermann, Dipl.-Phys.
(86) Internationale Anmeldenummer: EP9600778
(87) Internationale Veröffentlichungsnummer: WO9627477

(56) Entgegenhaltungen:
- EP-A- 0 425 817
- DE-A- 4 214 118
- DE-U- 7 925 807
- US-A- 4 953 734

## Beschreibung

Die Erfindung bezieht sich auf eine Abdeckung für ein Maschinenbett einer Werkzeugmaschine mit den Merkmalen des Oberbegriffs des Anspruchs 1.

Durch die DE 42 13 246 A1 ist eine Abdeckung für ein Maschinenbett einer Werkzeugmaschine bekannt, welche mehrere teleskopartig ineinanderschiebbare Abdeckkästen umfaßt. Jeder Abdeckkasten weist eine Oberwand, zwei Seitenwände und eine Rückwand auf. Die Oberwand und die beiden Seitenwände eines jeden Abdeckkastens sind aus einem einzigen ebenen Blechzuschnitt durch Abkanten hergestellt. Der durch die DE 42 13 246 A1 bekannte Abdeckkasten einer Abdeckung weist im Bereich seines hinteren Randes eine zur Abführung einer Flüssigkeit bestimmte Rinne auf. Die Rinne ist durch Biegen des hinteren Randes der Deckwand hergestellt. Durch die DE 42 13 246 ist ferner bekannt, die Rinne als ein gesondertes Teil an eine Rückwand des Abdeckkastens anzubringen.

Die EP 0 077 456 B1 offenbart eine Abdeckung für ein Maschinenbett von Werkzeugmaschinen, welche mehrere teleskopartig ineinanderverschiebbare Abdeckkästen umfaßt. Jeder Abdeckkasten weist eine nach oben offene Rinne auf, aus der Wasser und Späne kopf- und/oder endseitig abführbar sind.

Durch die DE 39 28 379 A1 ist eine Abdeckung für ein Maschinenbett einer Werkzeugmaschine bekannt. Die Abdeckung umfaßt teleskopartig ineinanderschiebliche Abdeckkästen. Jeder Abdeckkasten weist eine erste und eine zweite Seitenwand und eine mit den Seitenwänden verbundene Oberwand auf. An der Rückwand ist ein Verbindungsprofil angeordnet, das einen waagerecht abstehenden Tragschenkel aufweist, der mit der Oberwand verbunden ist. Das Verbindungsprofil weist eine Anschlagleiste auf, über die ein Abstreif- und Dämpfungsprofil überstülpt ist, welches zwei im Abstand zueinander ausgebildete Abstreiflippen aufweist, zwischen denen eine rinnenartige Ausnehmung ausgeformt ist. Das Verbindungsprofil weist zwei im Abstand zueinander ausgebildete Klemmschenkel auf, die teilweise eine Rückwand umgreifen. Die Oberwand ist mit dem Verbindungsprofil verklebt.

Durch die DE-OS 41 11 328 ist eine Teleskopabdeckung bekannt, die mehrere gegeneinander verschiebbare Abdeckelemente umfaßt. Jedes Abdeckelement ist kastenförmig ausgebildet, wobei jedes Abdeckelement ein Verbindungsprofil umfaßt, das stumpf mit einer Oberwand des Abdeckelementes verschweißt ist. Das Verbindungsprofil weist eine offene Nut auf, die zur Aufnahine eines weiteren Profils dient, das seinerseits eine als Flüssigkeitsrinne dienende, nach oben offene Nut hat und dessen nach unten gerichteter Schenkel eine Rückwand geringer Höhe bildet.

Durch die EP-A-0 425 817 ist eine Teleskopabdeckung für ein Maschinenbett einer Werkzeugmaschine mit den Merkmalen des Oberbegriffs des Anspruchs 1 bekannt. Die Teleskopabdeckung umfaßt ineinander schiebbare Abdeckkasten, wobei jeder Abdeckkasten ein mit einer Oberwand eines Abdeckkastens verbundenes Profil aufweist. Die Verbindung des Profils mit der Oberwand kann in Form einer Klemm-, Schweiß-, Schraub- oder Klebverbindung oder auch durch eine Kombination dieser Verbindungsarten hergestellt werden. Das Profil weist eine nach oben offene Rinne auf, die als Flüssigkeitsrinne dient.

Die Herstellung einer Rinne in der Oberwand des Abdeckkastens ist nur bei Abdeckungen möglich, die ein relativ schmales Maschinenbett überspannen. Für relativ breite Maschinenbetten werden Abdeckungen verwendet, die dachförmig ausgebildet sind. Hierdurch erhalt die Abdeckung in sich eine gewisse Steifigkeit. Bei dachförmig ausgebildeten Abdeckungen ist die Ausbildung einer Rinne in der Oberwand relativ aufwendig, da Ausnehmungen hergestellt werden müssen, die die Neigung der Oberwand berücksichtigen. Die aneinander stoßenden Kanten der Ausnehmung müssen anschließend abgedichtet werden, damit Flüssigkeit nicht zum Maschinenbett gelangt. Die Herstellung einer solchen Abdeckung ist relativ mit erheblichem Aufwand verbunden. Zur Aufnahme einer von einem Abdeckkasten abgestreiften Flüssigkeit ist es bekannt, das Profil mit einer Flüssigkeitsrinne zu versehen. Es kann jedoch nicht sichergestellt werden, daß wahrend es Betriebes der Abdeckung Flüssigkeit sowie Schmutzpartikel lediglich in die Flüssigkeitsrinne gelangen.

Hiervon ausgehend liegt der vorliegenden Erfindung die Aufgabe zugrunde, die bekannte Abdeckung für ein Maschinenbett einer Werkzeugmaschine mit einer nach oben offenen Rinne so weiterzubilden, daß sichergestellt wird, daß während des Betriebes der Abdeckung eine abgestreifte Flüssigkeit stets in eine Flüssigkeitsrinne gelangt.

Diese Aufgabe wird durch eine Abdeckung für ein Maschinenbett einer Werkzeugmaschlne mit den Merkmalen des Anspruchs 1 gelöst. Vorteilhafte Weiterbildungen sind Gegenstand der Unteransprüche.

Die erfindungsgemäße Abdeckung für ein Maschinenbett einer Werkzeugmaschine zeichnet sich dadurch aus, daß das Profil eine zweite zwischen den Seitenwänden verlaufende, nach oben offene Rinne aufweist, wobei zwischen der ersten und der zweiten Rinne ein mit dem Profil verbundener Abstreifer vorgesehen ist, der an einer Unterseite der Oberwand des nächst größeren Abdeckkastens anliegt.

Durch diese erfindungsgemäße Ausgestaltung der Abdeckung wird sichergestellt, daß das Kondensat sowohl bei einer Hin- als auch einer Herbewegung eines Kastens nicht auf ein Maschinenbett gelangt. Durch die Anordnung eines Abstreifers zwischen der ersten und der zweiten Rinne wird sichergestellt, daß bei einer Verschiebung des Abdeckkastens in der einen oder in der anderen Richtung der Abstreifer das Kondensat in die erste bzw in die zweite Rinne abstreift. Das Kondensat fließt dann innerhalb der Rinnen nach außen ab.

Vorzugsweise wird das Profil unmittelbar unterhalb der Oberwand befestigt. Dies hat den Vorteil, daß eine platzsparende Anordnung erreicht wird. Die Befestigung des Profils an der Oberwand erfolgt vorzugsweise mittels Befestigungsmitteln. Es bedarf daher keine Schweißarbeiten, die bei der Herstellung einer Abdeckung nach dem Stand der Technik erforderlich sind. Da keine Schweißarbeiten ausgeführt werden, ist ein Verzug und die damit verbundene Nacharbeitung der Abdeckung nicht mehr notwendig. Im Hinblick darauf, daß keine Schweißarbeiten ausgeführt werden müssen, kann die Abdeckung auch aus Abdeckkästen bestehen, die aus oberflächenbehandelten Blechen hergestellt sind. Ein Abdeckkasten kann z. B. aus einem verzinkten Blech bestehen.

Bevorzugt wird das Profil mit der Oberwand verschraubt. Dies hat den Vorteil, daß die Montage des Profils relativ einlach ist.

Vorzugsweise weist die Oberwand Laschen auf, die sich in der Oberwandebene erstrecken. Das Profil weist Ausnehmungen zur Aufnahme der Laschen auf. Das Profil ist mit den Laschen verbunden. Eine solche Ausbildung der Oberwand und des Profils hat den Vorteil, daß eine exakte Positionierung des Profils in Bezug auf die Oberwand ermöglicht wird.

Bevorzugt wird eine Ausführungsform, bei der die Ausnehmungen mit den Laschen in der Oberwandebene bündig abschließen. Durch diese Maßnahme sind auf der Oberwand keine störenden Vorsprünge durch das Profil gebildet.

Gemäß einem weiteren Gedanken wird vorgeschlagen, zwischen der Oberwand und dem Profil eine Dichtung vorzusehen. Die Dichtung gleicht die herstellungsbedingten Toleranzen zwischen der Oberwand und dem Profil aus, so daß keine Flüssigkeit zu dem Maschinenbett gelangt. Ist eine Dichtung vorgesehen, so ist diese bevorzugt mit dem Profil verbunden. Das Profil mit der Dichtung kann als bauliche Einheit mit der Oberwand eines Abdeckkastens der Abdeckung verbunden werden. Es wird hierzu vorgeschlagen, in dem Profil eine Nut zur Aufnahme der Dichtung vorzusehen. In diese Nut wird die Dichtung hineingedrückt und gegen die Oberwand gequetscht.

Durch die Weiterbildung nach Anspruch 9 wird eine Abdeckung für ein Maschinenbett einer Werkzeugmaschine vorgeschlagen, bei der das Profil mit einem Abstreifer verbunden ist, welcher an der Unterseite der Oberwand des nächst größeren Abdeckkastens anliegt. Bei einer Verschiebung der Abdeckkästen streift der Abstreifer das an der Unterseite der Oberwand haftende Kondensat ab. Der Abstreifer ist hierzu in einer im Profil ausgebildeten Nut angeordnet. Die Nut und wenigstens der in die Nut hineinragender Teil des Abstreifers sind so bemessen, daß vorzugsweise der Abstreifer ohne zusätzliche Hilfsmittel sicher mit dem Profil verbunden ist.

Bevorzugt wird eine Ausführungsform, bei der die Dichtung und/oder der Abstreifer lösbar mit dem Profil verbunden ist bzw. sind. Dies hat den Vorteil, daß ein Austausch des Abstreifers bzw. der Dichtung relativ einfach vonstatten gehen kann.

Bei den bekannten Abdeckungen sammelt sich die Flüssigkeit auf der Oberseite der Oberwand. Es ist bekannt, jeden Abdeckkasten mit einem Abstreifer zu versehen, wobei der Abstreifer an der Oberwand des Abdeckkasten angeordnet ist und die Oberwand des nächst kleineren Abdeckkastens abstreift. Dem Abstreifer gegenüberliegend ist eine Rinne zur Aufnahme der abgestreiften Flüssigkeit und/oder Späne vorgesehen. Da die einzelnen Abdeckkästen in Abhängigkeit von der Schlittenbewegung der Maschine verfahren werden, kann es geschehen, daß schlagartig große Flüssigkeitsmengen abgestreift werden. Um sicherzustellen, daß große Flüssigkeitsmengen auch abgeführt werden können, wird vorgeschlagen, die Rinne im Querschnitt mit einem im wesentlichen rechteckförmigen Eintrittsbereich auszubilden, der in einen seitlich offenen Sammelkanal übergeht. Der Sammelkanal weist einen wesentlich größeren Querschnitt als der Eintrittsbereich auf. Durch diese Ausbildung der Rinne wird erreicht, daß große Flüssigkeitsmengen von der Rinne aufgenommen werden können, ohne daß eine sofortige Abführung der Flüssigkeit mit zusätzlichen Hilfsmitteln notwendig ist.

Gemäß einem weiteren vorteilhaften Gedanken wird vorgeschlagen, die zweite Rinne, welche in dem Profil ausgebildet ist, mit dem Sammelkanal zu verbinden.

Das Profil kann zur Befestigung einer Rückwand verwendet werden. Die Rückwand wird mit dem Profil verschraubt.

Bei dem Profil kann es sich um ein Strangprofil handeln, welches auf das notwendige Maß abgelenkt wurde. Der Vorteil hiervon ist in den geringeren Herstellungskosten zu sehen. Das Profil kann aus Aluminium oder eine Aluminiumlegierung bestehen. Auch Kunststoffprofile sind möglich.

Wie bereits vorstehend ausgeführt, kann das Profil mit der Oberwand verschraubt sein. Es wird vorgeschlagen, im Eintrittsbereich der Rinne in Längsrichtung ausgebildete Gewindegänge vorzusehen. Diese Gewindegänge können unmittelbar bei der Herstellung des Profils hergestellt werden. Dies verringert die Herstellungskosten, da keine Gewinde in dem Profil geschnitten werden müssen.

Weitere Vorteile und Merkmale der erfindungsgemäßen Abdeckung werden anhand der beiden in der Zeichnung dargestellten Ausführungsbeispiele erläutert. Es zeigen:
- Fig. 1: schematisch in einer perspektivischen Darstellung eine Abdekkung,
- Fig. 2: ein erstes Ausführungsbeispiel im Längsschnitt und

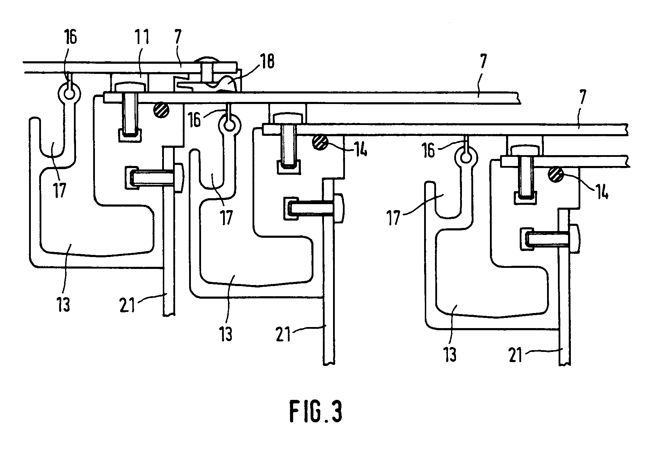

- Fig. 3: ein zweites Ausführungsbeispiel im Längsschnitt.

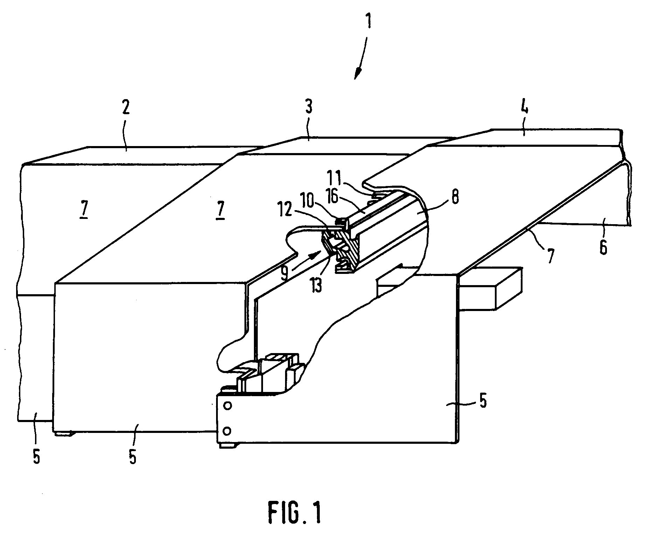

In der Fig. 1 ist schematisch eine Abdeckung 1 perspektivisch dargestellt. Die Abdeckung 1 umfaßt teleskopartig ineinanderschiebbare Abdeckkästen 2, 3, 4. Jeder Abdeckkasten 2, 3, 4 weist eine erste 5 und eine zweite 6 Seitenwand auf. Mit den Seitenwände 5, 6 ist eine Oberwand 7 verbunden, welche in dem in der Fig. 1 dargestellten Ausführungsbeispiel spitzdachförmig ausgebildet ist. Unmittelbar unterhalb der Oberwand 7 ist ein Profil 8 befestigt. Das Profil 8 ist an der Oberwand 7 mittels Befestigungsmitteln 10 verbunden. Bei den Befestigungsmitteln 10 handelt es sich um Schrauben.

Auf der Oberseite der Oberwand 7 sind Gleitstücke 11 angeordnet. Auf den Gleitstücken 11 gleitet die Unterseite der Oberwand 7 des nächst größeren Abdeckkastens. Die Gleitstücke 11 sind im Abstand zueinander angeordnet. Sie erstrecken sich jeweils nur über einen Teil der Breite der Oberwand 7, so daß eine von der Oberseite der Oberwand 7 abgestreifte Flüssigkeit zwischen den Gleitstücken 11 in die offene Rinne 9 abfließen kann. Die Gleitstücke 11 können z. B. aus Messing, Bronze oder Kunststoff bestehen. Die Gleitstücke 11 werden durch die Befestigungsmittel 10 mit der Oberwand 7 verbunden.

Die Oberwand 7 weist Laschen auf, welche mit Bohrungen versehen sind, durch die sich die Befestigungsmittel 11 hindurcherstrecken. Der zwischen den Laschen bestehende Freiraum ist mit der offenen ersten Rinne 9 verbunden.

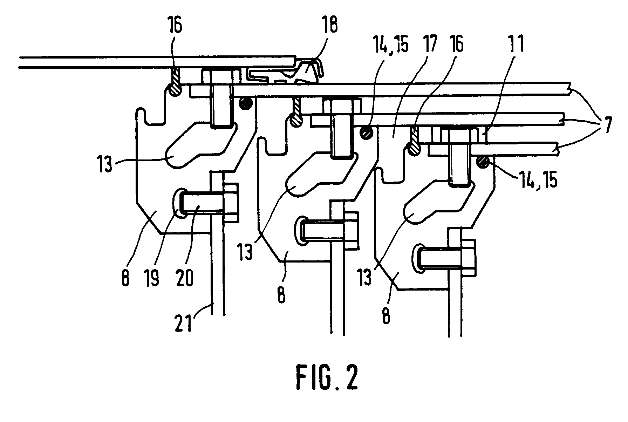

Die offene erste Rinne 9 ist in dem Profil 8 ausgebildet. Die erste Rinne 9 weist einen im wesentlichen rechteckförmigen Eintrittsabschnitt 12 auf, der in einem Sammelkanal 13 mündet. Wie aus den Fig. 1 und 2 ersichtlich ist, sind in dem Eintrittsbereich 12 Außengewinde ausgebildet, in welche die Schrauben eingeschraubt sind.

Zwischen der Unterseite der Oberwand 7 und dem Profil 8 ist eine Dichtung 14 angeordnet, welche in einer Nut 15 eingelegt ist. Die Nut 15 ist in dem Profil 8 ausgebildet.

Der ersten offenen Rinne 9 nachgeordnet ist ein Abstreifer 16, welcher an der Unterseite der Oberwand 7 des nächst größeren Abdeckkastens 2, 3, 4 anliegt. Das Profil weist eine zweite Rinne 17 auf, wobei der Abstreifer 16 zwischen der ersten Rinne 9 und der zweiten Rinne 17 angeordnet ist.

An dem dem Profil 8 gegenüberliegenden Ende der Oberwand 7 ist ein Abstreifer 18 vorgesehen, welcher auf der Oberseite der Oberwand 7 des nächst kleineren Abdeckkastens gleitet und die dort sich befindende Flüssigkeit und/oder Späne abstreift.

In dem Profil 8 ist eine Nut 19 ausgebildet, in welcher Schrauben 20 eingeschraubt sind. Die Schrauben 20 halten eine Rückwand 21 an dem Profil 8. Statt der Nut 19 können gesonderte Bohrungen für Schrauben 20 in dem Profil 8 vorgesehen sein.

## Patentansprüche

1. Abdeckung für ein Maschinenbett einer Werkzeugmascheine, umfassend teleskopartig ineinander schiebbare Abdeckkästen (2, 3, 4), wobei jeder Abdeckkasten (2, 3, 4) eine erste (5) und eine zweite (6) Seitenwand und eine mit den Seitenwänden (5, 6) verbundene Oberwand (7) sowie ein mit der Oberwand (7) verbundenes Profil (8) aufweist, das wenigstens eine erste zwischen den Seitenwände (5, 6) verlaufende, nach oben offene Rinne (9) aufweist,
dadurch gekennzeichnet, daß das Profil (8) eine zweite zwischen den Seitenwände (5, 6) verlaufende, nach oben offene Rinne (17) aufweist, wobei zwischen der ersten (9) und der zweiten Rinne (17) ein mit dem Profil (8) verbundener Abstreifer (16) vorgesehen ist, der an einer Unterseite der Oberwand (7) des nächsten größeren Abdeckkastens (2, 3, 4) anliegt.

2. Abdeckung nach Anspruch 1, dadurch gekennzeichnet, daß das Profil (8) mittels Befestigungsmitteln (10) an der Oberwand befestigt ist.

3. Abdeckung nach Anspruch 2, dadurch gekennzeichnet, daß das Profil (8) unmittelbar unterhalb der Oberwand (7) befestigt ist.

4. Abdeckung nach Anspruch 2 oder 3, dadurch gekennzeichnet, daß das Profil (8) mit der Oberwand (7) verschraubt ist.

5. Abdeckung nach einem der Ansprüche 2, 3 oder 4, dadurch gekennzeichnet, daß die Oberwand Laschen aufweist, die sich in einer Oberwandebene erstrecken, und daß das Profil Ausnehmungen zur Aufnahme der Laschen aufweist, und daß das Profil mit den Laschen verbunden ist.

6. Abdeckung nach Anspruch 5, dadurch gekennzeichnet, daß die Ausnehmungen mit den Laschen in der Oberwandebene bündig abschließen.

7. Abdeckung nach einem der Ansprüche 1 bis 6, dadurch gekennzeichnet, daß zwischen der Oberwand (7) und dem Profil (8) eine Dichtung (14) vorgesehen ist.

8. Abdeckung nach Anspruch 7, dadurch gekennzeichnet, daß die Dichtung (14) mit dem Profil (8) verbunden ist.

9. Abdeckung nach Anspruch 8, dadurch gekennzeichnet, daß das Profil (8) eine Nut (15) zur Aufnahme der Dichtung (14) aufweist.

10. Abdeckung nach einem der Ansprüche 1 bis 9, dadurch gekennzeichnet, daß der Abstreifer (16) in einer im Profil (8) ausgebildeten Nut angeordnet ist.

11. Abdeckung nach einem der Ansprüche 1 bis 10, dadurch gekennzeichnet, daß die Dichtung (14) und/oder der Abstreifer (16) lösbar mit dem Profil (8) verbunden ist bzw. sind.

12. Abdeckung nach einem der Ansprüche 1 bis 11, dadurch gekennzeichnet, daß die erste Rinne (9) im Querschnitt einen im wesentlichen rechteckförmigen Eintrittsbereich (12) aufweist, der in einen seitlich offenen Sammelkanal (13) übergeht.

13. Abdeckung nach Anspruch 12, dadurch gekennzeichnet, daß in dem Eintrittsbereich (12) Gewindegänge vorgebildet sind.

14. Abdeckung nach Anspruch 12 oder 13, dadurch gekennzeichnet, daß die zweite Rinne (17) mit dem Sammelkanal (13) verbunden ist.

15. Abdeckung nach einem der Ansprüche 1 bis 14, wobei jeder Abdeckkasten (2, 3, 4) eine Rückwand (21) aufweist, dadurch gekennzeichnet, daß die Rückwand (21) mit dem Profil (8) verbunden ist.

16. Abdeckung nach Anspruch 15, dadurch gekennzeichnet, daß die Rückwand (21) mit dem Profil (8) verschraubt ist.

17. Abdeckung nach einem der Ansprüche 1 bis 15, dadurch gekennzeichnet, daß das Profil (8) von einem Strangprofil abgelängt ist.

18. Abdeckung nach einem der Ansprüche 1 bis 17, dadurch gekennzeichnet, daß das Profil (8) aus Aluminium oder einer Aluminiumlegierung besteht.

19. Abdeckung nach einem der Ansprüche 1 bis 17, dadurch gekennzeichnet, daß das Profil (8) aus einem Kunststoff besteht.

## Claims

1. Cover for a machine bed of a machine tool, comprising cover boxes (2, 3, 4), which can be slid telescopically into one another, each cover box (2, 3, 4) having a first (5) and a second (6) side wall and a top wall (7) which is connected to the side walls (5, 6), as well as a section (8), which is connected to the top wall (7) and has at least a first upwardly open groove (9) which runs between the side walls (5, 6), characterized in that the section (8) has a second upwardly open groove (17) which runs between the side walls (5, 6), a wiper (16), which is connected to the section (8) and bears against an underside of the top wall (7) of the next larger cover box (2, 3, 4), being provided between the first groove (9) and the second groove (17).

2. Cover according to claim 1, characterized in that the section (8) is fastened to the top wall by means of fastening means (10).

3. Cover according to claim 2, characterized in that the section (8) is fastened directly below the top wall (7).

4. Cover according to claim 2 or 3, characterized in that the section (8) is screwed to the top wall (7).

5. Cover according to one of claims 2, 3 or 4, characterized in that the top wall has straps, which extend in a plane of the top wall, and in that the section has recesses for receiving the straps, and in that the section is connected to the straps.

6. Cover according to claim 5, characterized in that the recesses end flush with the straps in the plane of the top wall.

7. Cover according to one of claims 1 to 6, characterized in that a seal (14) is provided between the top wall (7) and the section (8).

8. Cover according to claim 7, characterized in that the seal (14) is connected to the section (8).

9. Cover according to claim 8, characterized in that the section (8) has a slot (15) to receive the seal (14).

10. Cover according to one of claims 1 to 9, characterized in that the wiper (16) is arranged in a slot formed in the section (8).

11. Cover according to one of claims 1 to 10, characterized in that the seal (14) and/or the wiper (16) is/are releaseably connected to the section (8).

12. Cover according to one of claims 1 to 11, characterized in that the first groove (9) in cross section has an essentially rectangular inlet region (12), which merges into a laterally open collection channel.

13. Cover according to claim 12, characterized in that threads are formed in the inlet region (12).

14. Cover according to claim 12 or 13, characterized in that the second groove (17) is in communication with the collection channel (13).

15. Cover according to one of claims 1 to 14, each cover box (2, 3, 4) having a rear wall (21), characterized in that the rear wall (21) is connected to the section (8).

16. Cover according to claim 15, characterized in that the rear wall (21) is screwed to the section (8).

17. Cover according to one of claims 1 to 15, characterized in that the section (8) is cut to length from an extruded section.

18. Cover according to one of claims 1 to 17, characterized in that the section (8) consists of aluminum or an aluminum alloy.

19. Cover according to one of claims 1 to 17, characterized in that the section (8) consists of a plastic.

## Revendications

1. Moyen de recouvrement pour un banc de machine-outil, comprenant des caissons de recouvrement (2, 3, 4) pouvant s'emboîter les uns dans les autres de manière télescopique, chaque caisson de recouvrement (2, 3, 4) comportant une première (5) et une seconde (6) paroi latérale et une paroi supérieure (7) reliée aux parois latérales (5, 6) ainsi qu'un profilé (8) qui est relié à la paroi supérieure (7) et qui est pourvu d'au moins une première rainure (9) qui s'étend entre les parois latérales (5, 6) et est ouverte vers le haut, caractérisé en ce que le profilé (8) est pourvu d'une seconde rainure (17) qui s'étend entre les parois latérales (5, 6) et est ouverte vers le haut, entre les première (9) et seconde rainure (17) étant prévue une racle (16) qui est réliée au profilé (8) et qui est appliquée contre le dessous de la paroi supérieure (7) du caisson de recouvrement suivant de plus grande dimension (2, 3, 4).

2. Moyen de recouvrement selon la revendication 1, caractérisé en ce que le profité (8) est fixé à la paroi supérieure à l'aide de moyens de fixation (10).

3. Moyen de recouvrement selon la revendication 2, caractérisé en ce que le profité (8) est fixé juste au-dessous de la paroi supérieure (7).

4. Moyen de recouvrement selon la revendication 2 ou 3, caractérisé en ce que le profité (8) est vissé à la paroi supérieure (7).

5. Moyen de recouvrement selon l'une des revendications 2, 3 ou 4, caractérisé en ce que la paroi supérieure comporte des pattes qui s'étendent dans le plan de la paroi supérieure, en ce que le profité est pourvu d'évidements pour recevoir les pattes et en ce que le profilé est relié aux pattes.

6. Moyen de recouvrement selon la revendication 5, caractérisé en ce que les évidements pourvus des pattes aboutissent de manière jointive dans le plan de la paroi supérieure.

7. Moyen de recouvrement selon l'une des revendications 1 à 6, caractérisé en ce qu'un joint (14) est prévu entre la paroi supérieure (7) et le profilé (8).

8. Moyen de recouvrement selon la revendication 7, caractérisé en ce que le joint (14) est relié au profilé (8).

9. Moyen de recouvrement selon la revendication 8, caractérisé en ce que le profilé (8) est pourvu d'une gorge (15) pour recevoir le joint (14).

10. Moyen de recouvrement selon l'une des revendications 1 à 9, caractérisé en ce que la racle (16) est disposée dans une gorge ménagée dans le profilé (8).

11. Moyen de recouvrement selon l'une des revendications 1 à 10, caractérisé en ce que le joint (14) et/ou la racle (16) est ou sont relié(e)(s) de manière démontable au profilé (8).

12. Moyen de recouvrement selon l'une des revendications 1 à 11, caractérisé en ce que la première rainure (9) comporte, en coupe transversale, une zone d'entrée sensiblement rectangulaire (12) qui se prolonge par un canal collecteur (13) ouvert latéralement.

13. Moyen de recouvrement selon la revendication 12, caractérisé en ce que des pas de vis sont préformés dans la zone d'entrée (12).

14. Moyen de recouvrement selon la revendication 12 ou 13, caractérisé en ce que la seconde rainure (17) est reliée au canal collecteur (13).

15. Moyen de recouvrement selon l'une des revendications 1 à 14, chaque caisson de recouvrement (2, 3, 4) comportant une paroi arrière (21), caractérisé en ce que la paroi arrière (21) est reliée au profilé (8).

16. Moyen de recouvrement selon la revendication 15, caractérisé en ce que la paroi arrière (21) est vissée au profilé (8).

17. Moyen de recouvrement selon l'une des revendications 1 à 15, caractérisé en ce que le profilé (8) est débité à partir d'un profilé extrudé.

18. Moyen de recouvrement selon l'une des revendications 1 à 17, caractérisé en ce que le profilé (8) est en aluminium ou en alliage d'aluminium.

19. Moyen de recouvrement selon l'une des revendications 1 à 17, caractérisé en ce que le profilé (8) est en matière plastique.
